# EUROPEAN PATENT APPLICATION

(11) **EP 4 258 053 A1**
(43) Date of publication of application: **11.10.2023**
(21) Application number: 23161215.1
(22) Date of filing: 10.03.2023
(51) Int. Cl.: G03B 21/20, G02B 27/00, H04N 9/00

(54) **ILLUMINATION SYSTEM AND PROJECITON DEVICE**

(30) Priority: 06.04.2022 US 202263327801 P; 23.06.2022 CN 202210717654
(71) Applicant: Coretronic Corporation, Hsin-Chu 300 (TW)
(72) Inventor: LIN, MENG-HSUAN, 300 Hsin-Chu (TW); CHEN, YEN-LIN, 300 Hsin-Chu (TW)
(74) Representative: Ter Meer Steinmeister & Partner

(57) **Abstract**

An illumination system includes a light source module, a first lens array, a condensing element, a second lens array, and a prism element. The light source module is configured to provide an illumination beam. The first lens array is disposed on the transmission path of the illumination beam. The condensing element is disposed on the transmission path of the illumination beam. The first lens array is located between the light source module and the condensing element. The second lens array is disposed on the transmission path of the illumination beam. The prism element is disposed on the transmission path of the illumination beam. The second lens array is located between the condensing element and the prism element, wherein the surface area of the second lens array is greater than the surface area of the first lens array.

## Description

This application claims priority of U.S. provisional applications serial no. 63/327,801, filed on April 6, 2022 and China application serial no. 202210717654.0, filed on June 23, 2022.

### BACKGROUND

### Technology Field

The disclosure relates to an optical system and a display device, and particularly, to an illumination system and a projection device having the illumination system.

### Description of Related Art

Projection devices are display devices for generating a large-area image and have been constantly improved along with the evolution and innovation of science and technology. The imaging principle of a projection device is to convert the illumination beam generated by the illumination system into an image beam through a light valve, and then the image beam is projected to a projection target (e.g., a screen or a wall) through a projection lens to form a projection image.

In pursuit of applying a compact projection device to a pico-projection device so as to be configured to a head-mounted display, the illumination system of the pico-projection device has gradually evolved from the early Red/Green/Blue LED light beams forming three pathways to the current Red and Blue/Green LED light beams forming two pathways, or to Red and Blue and Green LED light beams forming one pathway. All these three structures adopt a collimating lens to allow the light source provided by the light-emitting diode to be incident on the lens array in a parallel manner, and then the light beam on the lens array is focused on the imaging element of the light valve through the condensing lens. However, to implement the compact design with the smallest volume, the lowest number of light sources is adopted in design. Nonetheless, because some color light sources are single light sources and located at diagonally opposite positions, the projected image may have obvious color nonuniformity.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure provides an illumination system and a projection device, capable of improving the uniformity of the illumination beam and the uniformity of different colors.

Other objectives and advantages of the disclosure can be further understood from the technical features disclosed in the disclosure.

The object is solved by the features of the independent claims preferred embodiments are given in the dependent claims.

To achieve one, part of, or all of the above purposes or other purposes, the disclosure provides an illumination system, which includes a light source module, a first lens array, a condensing element, a second lens array, and a prism element. The light source module is configured to provide an illumination beam. The first lens array is configured on a transmission path of the illumination beam. The condensing element is disposed on the transmission path of the illumination beam. The first lens array is located between the light source module and the condensing element. The second lens array is disposed on the transmission path of the illumination beam. The prism element is disposed on the transmission path of the illumination beam. The second lens array is located between the condensing element and the prism element. A surface area of the second lens array is greater than a surface area of the first lens array.

In one or more embodiments, the second lens array may comprise a plurality of microlenses.

In one or more embodiments, the plurality of microlenses may be located on two opposite sides of the second lens array.

In one or more embodiments, the plurality of microlenses may be disposed in a hexagonal arrangement, in a rectangular arrangement, or in a spiral arrangement.

In one or more embodiments, an included angle may be formed by an extending direction of the second lens array and an extending direction of a light exit surface of the prism element.

In one or more embodiments, the light source module may comprise a light emitting element and a collimating lens group.

In one or more embodiments, the light emitting element may provide red light, green light, and blue light.

In one or more embodiments, the light emitting element may be formed by an arrangement of red, green, green and blue light-emitting diodes.

In one or more embodiments, the collimating lens group may comprise at least one optical lens.

In one or more embodiments, the collimating lens group may comprise a compound parabolic concentrator.

In one or more embodiments, the first lens array may be directly connected to the compound parabolic concentrator.

In one or more embodiments, the condensing element may have a reflective surface for reflecting the illumination beam to be transmitted to the second lens array.

In one or more embodiments, a spacing element may be disposed between the second lens array and the prism element.

In one or more embodiments, there may be a distance between the spacing element and the second lens array.

To achieve one, part of, or all of the above objectives or other objectives, the disclosure further provides a projection device including an illumination system, a light valve, and a projection lens. The illumination system is configured to provide an illumination beam. The illumination system includes a light source module, a first lens array, a condensing element, a second lens array, and a prism element. The light source module is configured to provide the illumination beam. The first lens array is disposed on a transmission path of the illumination beam. The condensing element is disposed on the transmission path of the illumination beam. The first lens array is located between the light source module and the condensing element. The second lens array is disposed on the transmission path of the illumination beam. The prism element is disposed on the transmission path of the illumination beam. The second lens array is located between the condensing element and the prism element. The light valve is disposed on the transmission path of the illumination beam for converting the illumination beam into an image beam. The projection lens is disposed on the transmission path of the image beam and configured for projecting the image beam out of the projection device. A surface area of the second lens array is greater than a surface area of the first lens array.

In summary, the embodiments of the disclosure have at least one of the following advantages or effects. In the illumination system and the projection device of the disclosure, the illumination system includes a light source module, a first lens array, a condensing element, a second lens array, and a prism element. The first lens array is disposed between the light source module and the condensing element and configured to control the magnitude(size) of the cross-sectional area of the illumination beam provided by the light source module to match the magnitude(size) of the surface area of the light valve receiving the illumination beam, the second lens array is disposed between the condensing element and the prism element and configured to change and uniform the light patterns of various colors in the illumination beam. Accordingly, the uniformity of the illumination beam and the uniformity of different colors can be improved, and the phenomenon of the nonuniformity of the color light emitted by the light emitting element can be improved.

Other objectives, features and advantages of the present disclosure will be further understood from the further technological features disclosed by the embodiments of the present disclosure wherein there are shown and described preferred embodiments of this disclosure, simply by way of illustration of modes best suited to carry out the disclosure.

### BRIEF DESCRIPTION OF THE DRAWING

The accompanying drawings are included to provide a further understanding of the disclosure, and are incorporated in and constitute a part of this specification. The drawings illustrate examples of the disclosure and, together with the description, serve to explain the principles of the disclosure.
FIG. 1 is a schematic view of a projection device according to an embodiment of the disclosure.
FIG. 2 is a schematic view of an illumination system according to an embodiment of the disclosure.
FIG. 3 is a schematic view of a light source module according to an embodiment of the disclosure.
FIG. 4A to FIG. 4C are schematic views of part of lens arrays according to different embodiments, respectively.
FIG. 5 is a schematic view of part of the enlarged illumination system of FIG. 2.
FIG. 6 is a schematic view of an illumination system according to another embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

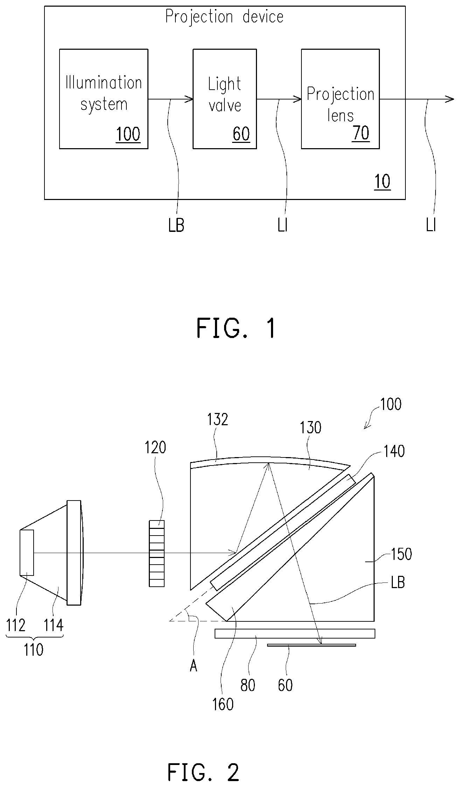

FIG. 1 is a schematic view of a projection device according to an embodiment of the disclosure. Referring to FIG. 1, in one embodiment, a projection device 10 may be applied to a head-mounted display. The embodiment provides the projection device 10 including an illumination system 100, a light valve 60, and a projection lens 70. The illumination system 100 is configured for providing an illumination beam LB. The light valve 60 is disposed on the transmission path of the illumination beam LB and configured for converting the illumination beam LB into an image beam LI. The projection lens 70 is disposed on the transmission path of the image beam LI and configured to project the image beam LI out of the projection device 10 to a projection target (not shown), such as a screen, a wall or a waveguide element of a head-mounted device.

In the embodiment, the light valve 60 is a reflective light modulator, such as a liquid crystal on silicon panel (LCoS panel), a digital micro-mirror device (DMD), and the like. The disclosure does not limit the type and mode of the light valve 60. The detailed steps and the implementation method for the light valve 60 to convert the illumination beam LB from the illumination system 100 into the image beam LI can be taught, suggested and implemented from ordinary knowledge in the technical field, which may not be repeated herein. In the embodiment, the number of the light valve 60 is one, for example, the projection device 10 using a single digital micro-mirror device. The light valve 60 can also adopt a liquid crystal silicon-on-chip panel. In the embodiment, the projection device 10 further includes a protective cover 80 (refer to FIG. 2), which is configured to prevent the light valve 60 from being in contact with dust and affecting the optical effect. The material of the protective cover 80 is glass or plastic, for example.

The projection lens 70 includes, for example, one optical lens or a combination of multiple optical lenses having dioptric power, such as various combinations of non-planar lenses such as biconcave lenses, biconvex lenses, meniscus lenses, convex-concave lenses, plano-convex lenses, and plano-concave lenses. In one embodiment, the projection lens 70 may further include a flat optical lens, which projects the image beam LI from the light valve 60 to the projection target in a reflective manner. The disclosure does not limit the type and mode of the projection lens 70.

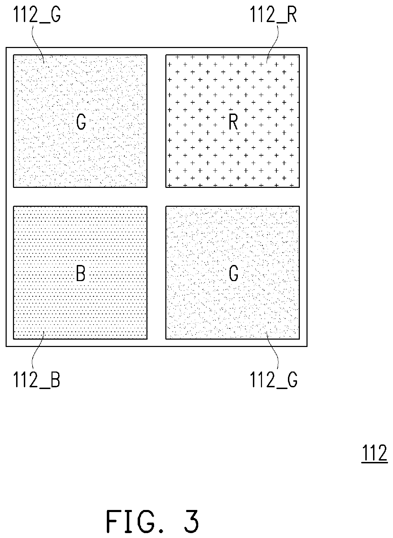

FIG. 2 is a schematic view of an illumination system according to an embodiment of the disclosure. FIG. 3 is a schematic view of a light source module according to an embodiment of the disclosure. Referring to FIG. 2 and FIG. 3, the illumination system 100 of the embodiment can be applied to at least the projection device 10 shown in FIG. 1, which is illustrated as an example in the subsequent paragraphs. In the embodiment, the illumination system 100 includes a light source module 110, a first lens array 120, a condensing element 130, a second lens array 140, and a prism element 150. The light source module 110 is configured to provide the illumination beam LB. In the embodiment, the light source module 110 includes a light emitting element 112 and a collimating lens group 114. The light emitting element 112 is, for example, an integrated light-emitting diode module and provides red light, green light, and blue light. Specifically, the light emitting element 112 is formed by an arrangement of red, green, green, and blue light-emitting diodes, the red and blue light-emitting diodes are located at diagonal positions, and the two green light-emitting diodes are located at diagonal positions, as shown in FIG. 3. Therefore, it is possible to implement the compact design with the smallest volume, but the disclosure is not limited thereto. In the embodiment, the collimating lens group 114 includes at least one optical lens, and the collimating lens group 114 is configured to provide the parallel illumination beam LB to the first lens array 120, but the disclosure is not limited thereto.

The first lens array 120 is disposed on the transmission path of the illumination beam LB and configured to control the magnitude of the cross-sectional area of the illumination beam LB provided by the light source module 110 to match the magnitude of the surface area of the light valve 60 receiving the illumination beam LB. For example, the magnitude(size) of the cross-sectional area of the illumination beam LB passing through the first lens array 120 is equal to or approximates to the magnitude(size) of the surface area of the light valve 60 receiving the illumination beam LB.

The first lens array 120 includes multiple microlenses, which may be located on one side of the first lens array 120 or on two opposite sides of the first lens array 120, and the disclosure is not limited thereto.

The condensing element 130 is disposed on the transmission path of the illumination beam LB, and the first lens array 120 is located between the light source module 110 and the condensing element 130. In the embodiment, the condensing element 130 has a reflective surface 132, e.g. coated with a reflective film, for reflecting the illumination beam LB to be transmitted to the second lens array 140.

The second lens array 140 is disposed on the transmission path of the illumination beam LB and configured to change and uniform the light patterns of each color (red, green, and blue) in the illumination beam LB, thereby improving the uniformity of the illumination beam LB and the uniformity of different colors, so that the phenomenon of the nonuniformity of the color light emitted by the light emitting element 112 can be prevented. The second lens array 140 includes multiple microlenses located on opposite sides of the second lens array 140. In the embodiment, physically, the surface area of the second lens array 140 is greater than the surface area of the first lens array 120. In addition, the area of the illumination beam LB received by the light incident surface of the second lens array 140 is also greater than the area of the illumination beam LB received by the light incident surface of the first lens array 120.

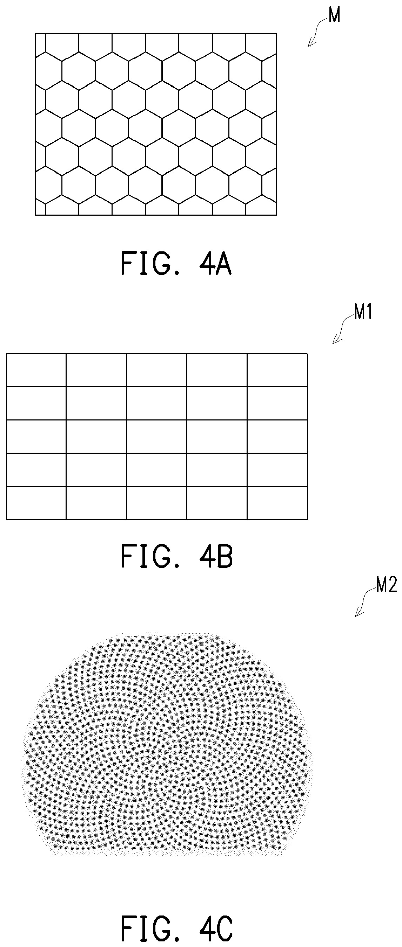

FIG. 4A to FIG. 4C are schematic views of part of lens arrays according to different embodiments, respectively. Referring to FIG. 2 and FIG. 4A to FIG. 4C, in different embodiments, microlenses M of the first lens array 120 and the second lens array 140 may have different arrangement designs according to different situations. For example, as shown in FIG. 4A, the microlenses M of the first lens array 120 and the second lens array 140 may be disposed in a hexagonal arrangement (or in a circular arrangement). Alternatively, as shown in FIG. 4B, the microlenses M1 of the first lens array 120 and the second lens array 140 may be disposed in a rectangular arrangement. Alternatively, as shown in FIG. 4C, the microlenses M2 of the first lens array 120 and the second lens array 140 may be disposed in a spiral arrangement (only the arrangement positions are illustrated in FIG. 4C for easy illustration), but the disclosure is not limited thereto.

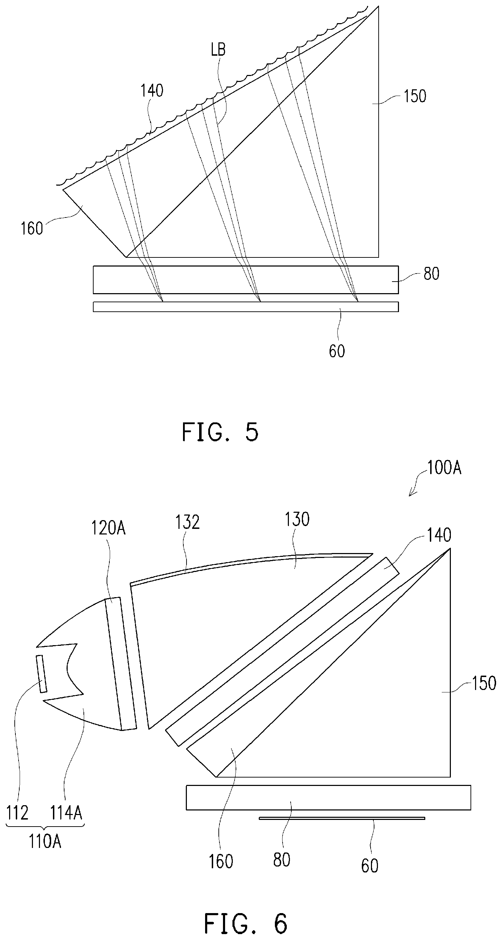

FIG. 5 is a schematic view of part of the enlarged illumination system of FIG. 2. Referring to FIG. 2 and FIG. 5, the prism element 150 is disposed on the transmission path of the illumination beam LB, and the second lens array 140 is located between the condensing element 130 and the prism element 150. The prism element 150 is, for example, a total internal reflection prism (TIR prism) and configured to guide the illumination beam LB to be transmitted to the light valve 60 and guide the image beam LI to the projection lens 70 (as shown in FIG. 1). In detail, the prism element 150 has a first surface and a light exit surface, the first surface of the prism element 150 faces the second lens array 140, and the light exit surface of the prism element 150 faces the light valve 60. The first surface of the prism element 150 is configured to receive the illumination beam LB, and the illumination beam LB enters the prism element 150 and is transmitted to the light valve 60. When the light valve 60 converts the illumination beam LB into the image beam LI, the image beam LI enters the prism element 150 again, and the image beam LI is reflected by the first surface of the prism element 150, leaves the prism element 150, and is transmitted to the projection lens 70.

In addition, in the embodiment, an included angle A is formed by the extending direction (this extending direction is perpendicular to the normal direction of the surface of the second lens array 140) of the second lens array 140 and the extending direction (this extending direction is perpendicular to the normal direction of the surface of the light valve 60) of the light exit surface of the prism element 150. The light exit surface of the prism element is parallel to the surface of the light valve 60. Specifically, the illumination system 100 may further include a spacing element 160, and there is a distance between the spacing element 160 and the second lens array 140.

The spacing element 160 is disposed between the second lens array 140 and the prism element 150 so that the optical path difference of the illumination beam LB in the air layer, resulting in the degraded quality of the projection image is prevented. Note that in the embodiment, the size (i.e., the optical area) of the second lens array 140 can be determined according to the magnitude(size) of the surface of the light valve 60 and the light-receiving angle thereof. Accordingly, the use efficiency of light can be improved, as shown in FIG. 5, and the uniformity of the illumination beam LB can be further improved.

FIG. 6 is a schematic view of an illumination system according to another embodiment of the disclosure. Referring to FIG. 6, an illumination system 100A of the embodiment is similar to the illumination system 100 shown in FIG. 2. What differs is that in the embodiment, a collimating lens group 114A of the light source module 110A includes a compound parabolic concentrator (CPC) configured to transform the light of different angles emitted by the light emitting element 112 into parallel light through the curved surface of the compound parabolic concentrator. Furthermore, the first lens array 120A is directly connected to the compound parabolic concentrator. Therefore, the volume of the illumination system 100A can be further downsized with favorable optical effects as well. In another embodiment, the first lens array 120A can also be directly configured and connected to the light incident surface of the condensing element 130. Accordingly, the uniformity of the illumination beam and the uniformity of different colors can be improved, and the phenomenon of the nonuniformity of the color light emitted by the light emitting element 112 can be prevented.

In summary, in the illumination system and the projection device of the disclosure, the illumination system includes a light source module, a first lens array, a condensing element, a second lens array, and a prism element. The first lens array is disposed between the light source module and the condensing element and configured to control the magnitude of the cross-sectional area of the illumination beam provided by the light source module to match the magnitude of the surface area of the light valve receiving the illumination beam, the second lens array is disposed between the condensing element and the prism element and configured to change and uniform the light patterns of various colors in the illumination beam, and the surface area of the second lens array is greater than the surface area of the first lens array. Accordingly, the uniformity of the illumination beam and the uniformity of different colors can be improved, and the phenomenon of the nonuniformity of the color light emitted by the light emitting element can be prevented.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby enabling persons skilled in the art in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the present disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the present disclosure as defined by the following claims. Moreover, no element and component in the present disclosure is intended to be dedicated to the public regardless of whether the element or component is explicitly recited in the following claims.

## Claims

1. An illumination system (100), comprising:
a light source module (110) configured to provide an illumination beam (LB);
a first lens array (120) provided on a transmission path of the illumination beam (LB);
a condensing element (130) disposed on the transmission path of the illumination beam (LB), wherein the first lens array (120) is located between the light source module (110) and the condensing element (130);
a second lens array (140) disposed on the transmission path of the illumination beam (LB); and
a prism element (150) disposed on the transmission path of the illumination beam (LB), wherein the second lens array (140) is located between the condensing element (130) and the prism element (150), wherein a surface area of the second lens array (140) is greater than a surface area of the first lens array (120).

2. The illumination system of claim 1, wherein the second lens array (140) comprises a plurality of microlenses (M).

3. The illumination system of claim 2, wherein the plurality of microlenses (M) are located on two opposite sides of the second lens array (140).

4. The illumination system according to claim 2 or 3, wherein the plurality of microlenses (M) are disposed in a hexagonal arrangement, in a rectangular arrangement, or in a spiral arrangement or a combination thereof.

5. The illumination system according to any one of the preceding claims, wherein an included angle is formed by an extending direction of the second lens array (140) and an extending direction of a light exit surface of the prism element (150).

6. The illumination system of any one of the preceding claims, wherein the light source module (110) comprises a light emitting element (112) and a collimating lens group (114).

7. The illumination system of claim 6, wherein the light emitting element (112) provides red light, green light, and blue light.

8. The illumination system of claim 6 or 7, wherein the light emitting element (112) is formed by an arrangement of red, green, green and blue light-emitting diodes.

9. The illumination system of any one of the preceding claims 6-8, wherein the collimating lens group (114) comprises at least one optical lens.

10. The illumination system of any one of the preceding claims 6-9, wherein the collimating lens group (114) comprises a compound parabolic concentrator.

11. The illumination system of claim 10, wherein the first lens array (120) is directly connected to the compound parabolic concentrator.

12. The illumination system of any one of the preceding claims, wherein the condensing element (130) has a reflective surface (132) for reflecting the illumination beam (LB) to be transmitted to the second lens array (140).

13. The illumination system of claim 8, the red and blue light-emitting diodes are located at diagonal positions, and the two green light-emitting diodes are located at diagonal positions.

14. The illumination system of any one of the preceding claims, further comprising a spacing element (160) disposed between the second lens array (140) and the prism element (150), preferably there is a distance between the spacing element (160) and the second lens array (140).

15. A projection device, comprising:
an illumination system (100) as claimed in any one of the preceding claims, wherein the illumination system (100) further comprises:
a light valve (60) disposed on the transmission path of the illumination beam (LB), for converting the illumination beam (LB) into an image beam (LI); and
a projection lens (70) disposed on the transmission path of the image beam (LI) and configured for projecting the image beam (LI) out of the projection device.
